# EUROPEAN PATENT APPLICATION

(11) **EP 0 772 321 A1**
(43) Date of publication of application: **07.05.1997**
(21) Application number: 96112971.5
(22) Date of filing: 12.08.1996
(51) Int. Cl.: H04L 12/44

(54) **Repeater with virtual LAN support**

(30) Priority: 27.10.1995 US 549613
(71) Applicant: Hewlett-Packard Company, Palo Alto, California 94304 (US)
(72) Inventor: Faulk, Robert L., Jr., Roseville, CA 95747 (US); McGuire, Robert M., Roseville, CA 95747 (US)
(74) Representative: Schoppe, Fritz, Dipl.-Ing.

(57) **Abstract**

A virtual LAN repeater adapted for carrying traffic from multiple virtual LAN groups. The repeater is adapted for retransmitting a data frame at approximately the same time as transmitting a virtual LAN identifier message based upon virtual LAN group membership of devices coupled to the devices. Furthermore, the repeater is also adapted for receiving the data frame from other similar repeaters, and for receiving the virtual LAN identifier message at approximately the same time as the data frame. In order to provide selective data communication between proximate devices and remote devices based upon virtual LAN group membership of the devices, the repeater of the invention selectively corrupts the data frame retransmitted to any of the remote devices having virtual LAN group membership that does not match the virtual LAN identifier message received by the second repeater, while faithfully retransmitting the data frame to any of the remote devices having virtual LAN membership that matches the virtual LAN identifier message received by the second repeater.

## Description

### Field of the Invention

The invention relates to data communication and more particularly to virtual local area networks for providing selective communication between devices on the same local area network or on different local area networks.

### Background of the Invention

A Local Area Network (LAN) provides for data communications between data processing equipment located within a limited geographical area, such as several thousand feet within a building or campus. For example, data processing equipment such as personal computers, mini-computers, mainframe computers, printers, and the like that are all located at a site can be interconnected using a LAN to advantageously share programs, data, and other information resources An example of a popular LAN is generally known as an "Ethernet" LAN, or as specified by the International Standards Organization in ISO 8802/3.

Each device connected to the LAN is assigned a LAN address for identifying location of the device. Data is transmitted over the LAN in complete data frames, each comprising, for example, an ordered arrangement of a preamble, a start-of-frame indicator, a destination address segment for indicting the LAN address of a device that is to receive data, a source address segment for indicating the LAN address of a device that is sending data, an optional control segment, a data segment, and a frame check segment. Other alternative ordered arrangements of segments within the complete data frame are also known to those skilled in the art.

While such LAN address schemes provide some advantages they also have some disadvantages, such as limited configuration flexibility in adding or removing devices. Furthermore it is desirable to provide data communication between devices located beyond the geographical limitations of a single LAN. The foregoing has lead to a desire for using virtual LAN groups wherein devices are logically grouped regardless of their location on any LAN. However, in the past choice of network components to support virtual LAN groups has suffered from a lack of standardization and availability.

Network bridges, network switches, network routers, and the like, which have extensive capabilities for storing data frames before retransmission, have been used to overcome some LAN limitations. However, such storage capabilities make network bridges and the like relatively complex and expensive. Furthermore, network bridges and the like limit performance by introducing retransmission delay in excess of the frame length. In contrast, repeaters provide enhanced performance by retransmitting data frames during a time interval that begins before any complete frame of data has been received by the repeater. Furthermore, repeaters are less complex and less expensive than network bridges because repeaters do not require extensive storage capabilities.

What is needed is a virtual LAN repeater adapted for carrying traffic from multiple virtual LAN groups.

### Summary of the Invention

The present invention provides a virtual LAN repeater adapted for carrying traffic from multiple virtual LAN groups, wherein devices are logically grouped as desired, regardless of their location on any LAN. The present invention further provides for flexible virtual LAN configuration of data communication between devices located beyond the geographical limitations of a single LAN.

Briefly and in general terms, to provide data communication between proximate devices and remote devices, the invention includes a first repeater coupled with the proximate devices and a second repeater coupled with the remote located devices. The first repeater is coupled to the proximate devices for receiving a data frame from any of the proximate devices. The first repeater is adapted for retransmitting the data frame at approximately the same time as transmitting a virtual LAN identifier message based upon virtual LAN group membership of the devices. The second repeater is coupled with the first repeater for receiving the data frame and for receiving the virtual LAN identifier message at approximately the same time as the data frame. The second repeater is coupled with the remote devices for retransmitting the data frame to the remote devices.

In order to provide selective data communication between the proximate devices and the remote devices based upon virtual LAN group membership of the devices, the repeater of the invention selectively corrupts the data frame retransmitted to any of the remote devices having virtual LAN group membership that does not match the virtual LAN identifier message received by the second repeater, while faithfully retransmitting the data frame to any of the remote devices having virtual LAN group membership that matches the virtual LAN identifier message received by the second repeater. The corrupt frame is ignored by such remote devices, while the un-corrupted frame is accepted by such remote devices.

Other aspects and advantages of the present invention will become apparent from the following detailed description, taken in conjunction with the accompanying drawings, illustrating by way of example the principles of the invention.

### Brief Description of the Drawings

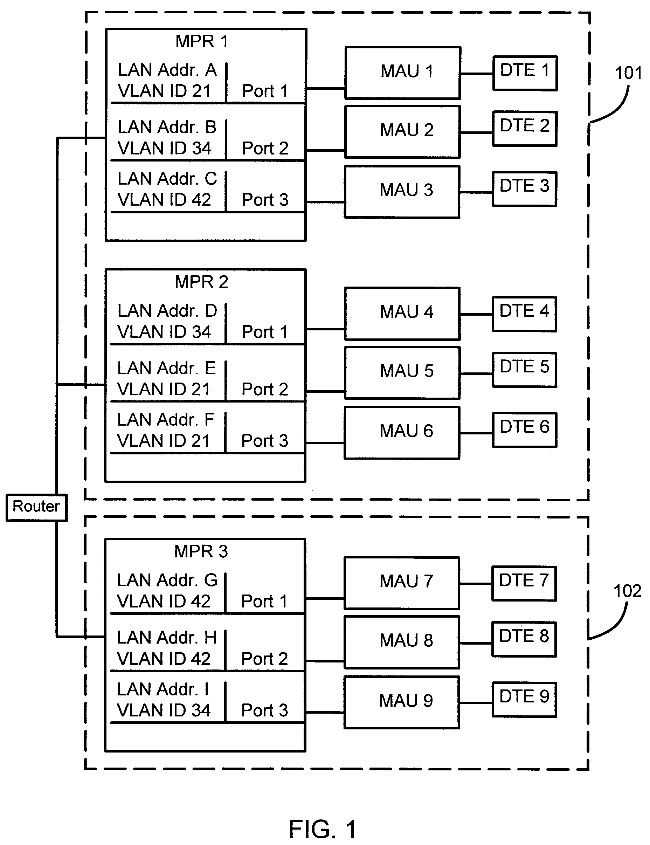

FIG. 1 shows a simplified block diagram of the present invention.

### Detailed Description of the Preferred Embodiment

As shown in FIG. 1, the present invention provides a virtual LAN repeater for carrying traffic from multiple virtual LAN groups. It should be understood that on a traditional LAN, devices communicate with each other using either unicast addresses, for example a directed address, or multicast addresses, for example a multiple recipient addressee. Devices on different LAN's communicate by going through routers. In general, a virtual LAN shares these characteristics. Multiple virtual LAN's exist within a single physical LAN or within different LAN's.

A block diagram of FIG. 1 shows an exemplary nine devices of data terminal equipment, DTE 1 to DTE 9, such as computers, printers, disk drives, and the like. There are also shown three multiport repeaters of the invention (MPR 1, MPR 2, and MPR 3). Although operative features of the three multiport repeaters of the invention are discussed separately herein, it should be understood that in the preferred embodiment the repeaters are structurally identical so that they each provide all of the operative features discussed, and can be reprogrammed so as to be interchangeable with one another.

Each of the devices of data terminal equipment is coupled to one of the three multiport repeaters through a respective medium attachment unit, MAU 1 through MAU 9. The nine MAU's are coupled to ports of the multiport repeaters, which provide assignment of conventional LAN addresses for the nine devices of data terminal equipment. For the sake of simplicity, in the discussions herein the conventional LAN addresses are described using letters A through I.

In the exemplary arrangement of FIG. 1, two local area networks are shown: a first local area network 101, and a second local area network 102. The first local area network 101 includes DTE 1 assigned a LAN address A and coupled to port 1 of MPR 1, DTE 2 assigned a LAN address B and coupled to port 2 of MPR 1, and DTE 3 assigned a LAN address C and coupled to port 3 of MPR 1. The first local area network further includes: DTE 4 assigned a LAN address D and coupled to port 1 of the second multiport repeater of the invention, MPR 2; DTE 5 assigned a LAN address E and coupled to port 2 of MPR 2; and DTE 6 assigned a LAN address F and coupled to port 3 of MPR 2. The second local area network 102 includes DTE 7 assigned a LAN address G and coupled to port 1 of MPR 3, DTE 8 assigned a LAN address H and coupled to port 2 of MPR 3, and DTE 9 assigned a LAN address I and coupled to port 3 of MPR 3.

As discussed in further detail subsequently herein, the present invention advantageously provides for virtual LAN groups, wherein the exemplary nine devices of data terminal equipment are logically grouped regardless of their location on any of the LAN's. For example, even though proximate devices DTE 1, DTE 2, and DTE 3, are all connected to the first LAN, they each have assigned a different virtual LAN identifier (VLAN ID), and accordingly each have a respective membership in a different virtual LAN group. In the particular example of FIG. 1, DTE 1 is assigned VLAN ID 21, while DTE 2 is assigned a different VLAN ID 34, and DTE 3 is assigned yet another different VLAN ID 42. As shown, the first multiport repeater, MPR 1, includes port registers for assigning a respective virtual LAN identifier to each of the ports of the first repeater so as to identify virtual LAN group membership of the respective device coupled thereto.

Since the port registers of the repeater of the invention are programmable by a computer or other device coupled to the repeater, the port registers provide advantageous configuration flexibility in adding or removing devices to any virtual LAN group. For example, the register of port 1 of MPR 1, and registers of ports 2 and 3 of MPR 2 are each programed with VLAN ID 21, so that DTE 1, DTE 5, and DTE 6 are flexibly configured to all have membership in the same virtual LAN group. Similarly, a register of port 2 of MPR 1, a register of port 1 of MPR 2, and a register of port 3 of MPR 3 are each programed with VLAN ID 34, so that DTE 2, DTE 4, and DTE 9 are flexibly configured to all have membership in the same virtual LAN group, even though DTE 2 and DTE 4 is connected to the first LAN, and DTE 9 is connected to the second LAN. Furthermore, the register of port 3 of MPR 1, and registers of ports 1 and 2 of MPR 3 are each programed with VLAN ID 42, so that DTE 3, DTE 7, and DTE 8 are flexibly configured to all have membership in the same virtual LAN group, even though DTE 3 is connected to the first LAN, 101, while DTE's 7 and 8 are connected to the second LAN, 102.

To understand operation of the invention in providing selective data communication with remote devices, for example DTE 4, DTE 5, and DTE 6, it should first be understood that the plurality of ports of the first multiport repeater are each coupled to a respective one of the proximate devices, DTE 1, DTE 2, and DTE 3, for receiving a data frame from any one of the proximate devices, and for retransmitting the data frame during a time interval that begins before the complete frame of data has been received by the first repeater, MPR 1. The first repeater, MPR 1, includes a message generator coupled with the port registers for generating a respective virtual LAN identifier message based upon the respective virtual LAN identifier assigned to each of the ports. The first repeater, MPR 1, further includes a transmitter coupled with the message generator for transmitting the virtual LAN identifier message at approximately the same time as the data frame is retransmitted by the repeater.

In the following illustrative example, port 1 of the first multiport repeater, MPR 1, is coupled to device DTE 1 for receiving and retransmitting a particular data frame, which is ultimately destined for LAN address F. Meanwhile, the message generator coupled with the register of port 1 generates a virtual LAN identifier message based upon virtual LAN identifier 21 assigned to port 1, and the transmitter transmits the virtual LAN identifier message at approximately the same time as the data frame received from the DTE 1 is retransmitted by the repeater, preferably at approximately the same time as a start of the data frame is retransmitted by the repeater. Accordingly, it should be understood that the particular data frame is destined for a particular one of the remote devices, DTE 6, which has assigned LAN address F and also has membership in the same virtual LAN group as DTE 1.

In a preferred embodiment, different carrier frequencies are used to transmit the virtual LAN identifier message and the data frame on the same wire of a network cable interconnecting the three multiport repeaters. In another preferred embodiment, a first set of wires of the network cable are used to transmit the virtual LAN identifier message and a different set of wires of the network cable are used to transmit the data frame.

As shown in FIG. 1 the second multiport repeater ,MPR 2, is coupled with the first multiport repeater, MPR 1, for receiving the data frame and for receiving the virtual LAN identifier message at approximately the same time as the data frame, preferably at approximately the same time as the start of the data frame. The plurality of ports of the second multiport repeater, MPR 2, are each coupled with a respective remote device for retransmitting the data frame through the ports to the remote devices during a time interval that begins before any complete frame of data has been received by the second repeater. The second repeater further includes a respective comparator coupled with each of the port registers for comparing the virtual LAN identifier message received with the virtual LAN identifiers assigned to the ports of the second repeater, MPR 2, so as determine for each virtual LAN identifier whether there is any match with the virtual LAN identifier message.

In order to provide selective data communication between the proximate devices (in the present example: DTE 1, DTE 2, and DTE 3) and the remote devices (in the present example: DTE 4, DTE 5, and DTE 6) based upon virtual LAN group membership of the devices, the preferred embodiment of the repeater of the invention includes a selective data scrambler having a respective multiplexor coupled between each comparator and a corresponding one of the ports. The selective data scrambler corrupts the data frame retransmitted to any of the remote devices having virtual LAN group membership that does not match the virtual LAN identifier message received by the second repeater, while faithfully retransmitting the data frame to any of the remote devices having virtual LAN group membership that matches the virtual LAN identifier message received by the second repeater. The corrupt frame is ignored by such remote devices, while the un-corrupted frame is accepted by such devices.

In the particular example presently under discussion, the second multiport repeater, MPR 2, is coupled with the first multiport repeater, MPR 1, for receiving the data frame from DTE 1 destined for LAN address F, and for receiving the virtual LAN identifier message based upon VLAN ID 21, which identifies the virtual LAN group membership of DTE 1. The comparator coupled with the register of port 1 of MPR 2 compares the virtual LAN identifier message based upon VLAN ID 21 with the virtual LAN identifier, VLAN ID 34, assigned to port 1. Since the comparator determines that there is no match between VLAN ID 34, the virtual LAN identifier assigned to port 1 of MPR 2, and VLAN ID 21 of the virtual LAN identifier message, the multiplexor responds to the no match determination of the comparator by routing a scrambled signal so as to corrupt the frame that is retransmitted to DTE 4 through port 1. In preferred embodiments, the scrambled signal includes a series of binary digits selected from among all 1's, all 0s, cyclically repeated sequences, and pseudo-random sequences. The corrupt frame is ignored by the MAU 4 coupled to DTE 4.

In contrast, no corruption is performed by the other multiplexors of the selective data scrambler upon the data frame that is retransmitted to DTE's 5 and 6, because DTE's 5 and 6 have virtual LAN group membership of VLAN ID 21, which matches the virtual LAN identifier message based upon VLAN 21. However, it should be understood that since the data frame is destined for LAN address F (which is encoded in the destination address segment of the data frame), MPR 2 recognizes that the data frame is not destined for DTE 5, (which is assigned LAN address E). MPR 2 decodes the destination address segment of the data frame, and recognizes that the data frame is destined for DTE 6, which is assigned LAN address F. The data frame is faithfully transmitted through port 3 of MPR 2 to DTE 6.

The present invention further provides for flexible virtual LAN configuration of data communication between devices located beyond the geographical limitations of a single LAN. As shown in FIG. 1, a router couples the first LAN 101 to the second LAN 102, which is located beyond the geographical limitations of the first LAN. In a similar manner as discussed previously herein with respect to selective data communication between devices of the first local area network based upon virtual LAN group membership of the devices, the third repeater of the invention, MPR 3, provides for selective data communication between additional remote devices of the second local area network and the devices of the first local area network based upon virtual LAN group membership of the devices.

As discussed, the present invention provides a virtual LAN repeater to carry traffic from multiple virtual LAN's. Although specific embodiments of the invention have been described and illustrated, the invention is not to be limited to the specific forms or arrangements of parts so described and illustrated, and various modifications and changes can be made without departing from the scope and spirit of the invention. Within the scope of the appended claims, therefor, the invention may be practiced otherwise than as specifically described and illustrated.

## Claims

1. An apparatus for selective data communication between proximate devices and remote devices based upon virtual LAN group membership of the devices, comprising:
a first repeater coupled to the proximate devices for receiving a data frame from any one of the proximate devices, the first repeater being adapted for retransmitting the data frame at approximately the same time as transmitting a virtual LAN identifier message based upon virtual LAN group membership of the devices;
a second repeater coupled with the first repeater for receiving the data frame and for receiving the virtual LAN identifier message at approximately the same time as the data frame, the second repeater being coupled with the remote devices for retransmitting the data frame to the remote devices; and
means for selectively corrupting the data frame retransmitted to any of the remote devices having virtual LAN group membership that does not match the virtual LAN identifier message received by the second repeater, while faithfully retransmitting the data frame to any of the remote devices having virtual LAN group membership that matches the virtual LAN identifier message received by the second repeater, thereby providing the selective data communication between the proximate devices and the remote devices based upon virtual LAN group membership of the devices.

2. An apparatus comprising:
a first multiport repeater having a plurality of ports each coupled to a respective one of a plurality of proximate devices, the first repeater being adapted for receiving a data frame from any one of the devices and for retransmitting the data frame during a time interval that begins before the complete frame of data has been received by the first repeater, the first repeater including;
port registers for assigning a respective virtual LAN identifier to each of the ports of the first repeater so as to identify virtual LAN group membership of the respective proximate device coupled thereto;
a message generator coupled with the port registers for generating a respective virtual LAN identifier message based upon the respective virtual LAN identifier assigned to each of the ports; and
a transmitter coupled with the message generator for transmitting the virtual LAN identifier message at approximately the same time as the data frame is retransmitted by the repeater.

3. An apparatus as in claim 2 further comprising:
a second multiport repeater coupled with the first multiport repeater for receiving the data frame and for receiving the virtual LAN identifier message at approximately the same time as the data frame, the second repeater having a plurality of ports each coupled with a respective remote device for retransmitting the data frame through the ports to the remote devices during a time interval that begins before any complete frame of data has been received by the second repeater, the second repeater including;
port registers for assigning a respective virtual LAN identifier to each of the ports of the second repeater so as to identify virtual LAN group membership of the respective remote device coupled thereto;
comparators coupled with the port registers for comparing the virtual LAN identifier message received with the virtual LAN identifiers assigned to the ports of the second repeater;
a selective data scrambler coupled with the comparators for selectively corrupting the data frame retransmitted through those ports wherein the assigned virtual LAN identifier does not match the virtual LAN identifier message received by the repeater, while faithfully retransmitting the data frame through those ports wherein the assigned virtual LAN identifier matches the virtual LAN identifier message received by the repeater, thereby providing selective data communication between the proximate devices and the remote devices based upon virtual LAN group membership of the devices.

4. An apparatus comprising:
a multiport repeater adapted for receiving a data frame and for receiving a virtual LAN identifier message at approximately the same time as the data frame, the repeater having a plurality of ports each coupled to a respective device for retransmitting the data frame through the ports to the devices during a time interval that begins before any complete frame of data has been received by the repeater, said repeater including;
port registers for assigning a respective virtual LAN identifier to each of the ports so as to identify virtual LAN group membership of the devices coupled thereto;
comparators coupled with the port registers for comparing the virtual LAN identifiers assigned to the ports of the repeater with the virtual LAN identifier received at approximately the same time as the data frame;
a selective data scrambler coupled with the comparators for selectively corrupting the data frame retransmitted through those ports wherein the assigned virtual LAN identifier does not match the virtual LAN identifier message received by the repeater, while providing for faithful retransmission of the data frame through those ports wherein the assigned virtual LAN identifier matches the virtual LAN identifier message received by the repeater, thereby providing selective data communication between the proximate devices and the remote devices based upon virtual LAN group membership of the devices.

5. A method comprising the steps of:
providing a first multiport repeater having a plurality of ports each coupled to a respective proximate device and
assigning a respective virtual LAN identifier to each of the ports of the first repeater so as to identify virtual LAN group membership of the respective proximate device coupled thereto;
generating a respective virtual LAN identifier message based upon the respective virtual LAN identifier assigned to each of the ports; and
transmitting the virtual LAN identifier message at approximately the same time as the data frame is retransmitted by the repeater;

6. A method as in claim 5 further comprising the steps of:
providing a second multiport repeater having a plurality of ports each coupled to a respective remote device;
assigning a respective virtual LAN identifier to each of the ports of the second repeater so as to identify virtual LAN group membership of the respective remote device coupled thereto;
comparing the virtual LAN identifier message received with the virtual LAN identifiers assigned to the ports of the second repeater; and
selectively corrupting the data frame retransmitted through those ports wherein the assigned virtual LAN identifier does not match the virtual LAN identifier message received by the repeater, while providing for faithful retransmission of the data frame through those ports wherein the assigned virtual LAN identifier matches the virtual LAN identifier message received by the repeater, thereby providing selective data communication between the proximate devices and the remote devices based upon virtual LAN group membership of the devices.
